# EUROPÄISCHE PATENTSCHRIFT

(11) **EP 2 089 272 B1**
(45) Veröffentlichungstag und Bekanntmachung des Hinweises auf die Patenterteilung: **08.02.2012**
(21) Anmeldenummer: 07819559.1
(22) Anmeldetag: 02.11.2007
(51) Int. Cl.: B64C 1/26

(54) **FLÜGEL-RUMPF-VERBINDUNG EINES FLUGZEUGS**
WING/FUSELAGE CONNECTION FOR AN AIRCRAFT
ASSEMBLAGE AILE-FUSELAGE D'UN AVION

(30) Priorität: 02.11.2006 DE 102006051572
(43) Veröffentlichungstag der Anmeldung: 19.08.2009
(73) Patentinhaber: Airbus Operations GmbH, 21129 Hamburg (DE)
(72) Erfinder: VOSS, Ursula, 28277 Bremen (DE); ROCKER, Joel, 31810 Clermont le Fort (FR)
(74) Vertreter: Schatt, Markus F.
(86) Internationale Anmeldenummer: PCT/EP2007/009536
(87) Internationale Veröffentlichungsnummer: WO 2008/052801

(56) Entgegenhaltungen:
- NIU, MICHAEL C.Y.: "Airframe Structural Design, 2nd Edition, ISBN 962-7128-09-0" Februar 2002 (2002-02), HONG KONG CONMILIT PRESS , HONG KONG , XP002462359 Seite 408 - Seite 409; Abbildung 11.5.7

## Beschreibung

Die Erfindung betrifft eine Flügel-Rumpf-Verbindung nach dem Oberbegriff des Anspruchs 1.

Das Buch "Airframe Structural Design" von Michael C.Y.Niu, Februar 2002, Hong Kong (ISBN 962-7128-09-0) zeigt auf den Seiten 408 und 409 derartige Flügel-Rumpf-Verbindungen.

Bei Flugzeugen mit einem im oberen Bereich des Rumpfs angeordneten Flügel, wie typischerweise bei einem Hochdecker, ist der Flügel üblicherweise mittels einer Anzahl von Flügelanschlüssen mit dem Rumpf verbunden, wobei die Anschlüsse zur Aufnahme von Kräften in unterschiedlichen Richtungen vorgesehen sind. Die Flügelanschlüsse sind auf eine maximale Lasttragfähigkeit ausgelegt. Diese sind Flug- und Landelasten, aber auch Crash-Lasten mit vorgegebenen Beschleunigungswerten. Ein mögliches Konstruktionsprinzip der Flügelanschlüsse ist in Form sogenannter Pendelstützen, die sowohl rumpfseitig wie flügelseitig mittels Gelenklagern angeschlossen sind.

Bei dem bekannten Transportflugzeug TRANSALL ist der Flügel an jeder Seite des Rumpfs mittels jeweils sieben solcher Pendelstützen angeschlossen, welche zur Aufnahme von Kräften in der Flugzeug-Hochachsenrichtung Z und in der Flugzeug-Längsrichtung X dienen. Diese Flügelanschlüsse sind im Wesentlichen in einer Reihe in X-Richtung hintereinander angeordnet, wobei sie rumpfseitig an einem Längsträger und flügelseitig an einer verstärkten Rippe befestigt sind. Der Anschluss in Y-Richtung, d.h. in Spannweitenrichtung, wird hier zunächst nicht beachtet.

Die Aufgabe der Erfindung ist es, eine Anschlussvorrichtung einer Flügel-Rumpf-Verbindung zu schaffen, mit der die Flügel-Rumpf-Verbindung mit einer geringen Anzahl von Flügelanschlüssen und geringem Gewicht ausführbar ist und dabei eine möglichst große Lasttragfähigkeit und Schadenstoleranz der Flügel-Rumpf-Verbindung erreichbar ist.

Diese Aufgabe wird durch eine Flügel-Rumpf-Verbindung mit den Merkmalen des Anspruchs 1 gelöst. Vorteilhafte Ausführungsformen und Weiterbildungen der erfindungsgemäßen Flügel-Rumpf-Verbindung sind in den Unteransprüchen angegeben.

Durch die Erfindung wird eine Flügel-Rumpf-Verbindung eines Flugzeugs, bei der ein im oberen Bereich des Rumpfs angeordneter Flügel mittels einer Anzahl von Anschlüssen mit dem Rumpf verbunden ist, geschaffen, wobei die Anschlüsse zur Aufnahme von Kräften in unterschiedlichen Richtungen vorgesehen sind. Erfindungsgemäß ist es vorgesehen, dass die Lasttragfähigkeit der einzelnen Flügelanschlüsse und deren Kraftaufnahmerichtung so aufeinander abgestimmt sind, dass bei Defekt von einem der Anschlüsse die maximale Lasttragfähigkeit der verbleibenden Anschlüsse für einen sicheren Normalflugbetrieb ausreicht.

Gemäß einer Ausführungsform der Erfindung ist es vorgesehen, dass der Flügel an jeder Seite des Rumpfs mittels vier zur Aufnahme von Kräften im Wesentlichen (d.h. mit einer Abweichung von ± 30 Grad und insbesondere von ± 15 Grad) in Flugzeug-Hochachsenrichtung Z und in Flugzeug-Längsrichtung X vorgesehenen Flügelanschlüssen mit dem Rumpf verbunden ist, und dass bei Defekt von einem der Anschlüsse die maximale Lasttragfähigkeit der verbleibenden Anschlüsse für einen sicheren Normalflugbetrieb ausreicht.

Nach der Erfindung umfassen die Flügelanschlüsse erste Flügelanschlüsse, die vorzugsweise zur Aufnahme von Kräften im Wesentlichen in Flugzeug-Hochachsenrichtung Z vorgesehen sind, und zweite Flügelanschlüsse, die vorzugsweise bei in vollständiger Anzahl intakten Flügelanschlüssen zur Aufnahme von Kräften im Wesentlichen in Flugzeug-Längsrichtung X vorgesehen sind.

Erfindungsgemäß ist dabei die Lasttragfähigkeit der zweiten Flügelanschlüsse und deren Kraftaufnahmerichtung in Bezug auf ihre Winkellage so vorgesehen, dass diese bei Ausfall eines der ersten Flügelanschlüsse zusammen mit dem zumindest einen intakt verbleibenden ersten Flügelanschluss die in der Flügel-Rumpf-Verbindung auftretenden Lasten aufnehmen, ohne dass deren maximale Lasttragfähigkeit bei Normalflugbetrieb überschritten wird.

Weiterhin ist die Lasttragfähigkeit der ersten Flügelanschlüsse und deren Kraftaufnahmerichtung vorzugsweise so vorgesehen, dass diese bei Ausfall eines der zweiten Flügelanschlüsse zusammen mit den intakt verbleibenden zweiten Flügelanschlüssen die in der Flügel-Rumpf-Verbindung auftretenden Lasten aufnehmen, ohne dass deren maximale Lasttragfähigkeit bei Normalflugbetrieb überschritten wird.

Gemäß einer Ausführungsform der erfindungsgemäßen Flügel-Rumpf-Verbindung sind an jeder Seite des Rumpfs zwei der ersten Flügelanschlüsse und zwei der zweiten Flügelanschlüsse vorgesehen.

Gemäß einer Ausführungsform der Erfindung sind die beiden ersten Flügelanschlüsse nahe dem vorderen Flügelholm bzw. dem hinteren Flügelholm angeordnet, und die beiden zweiten Flügelanschlüsse dazwischen vorgesehen.

Gemäß einer Ausführungsform erstrecken sich die ersten Flügelanschlüsse im Wesentlichen parallel zur Z-Richtung zwischen dem Rumpf und dem Flügel, und die zweiten Flügelanschlüsse erstrecken sich im Wesentlichen in einer in der X-Z-Ebene liegenden Richtung schräg zur Z-Richtung zwischen dem Rumpf und dem Flügel, wobei die Schrägstellungswinkel der zweiten Flügelanschlüsse so bemessen und aufeinander abgestimmt sind, dass die zweiten Flügelanschlüsse bei Defekt eines der ersten Flügelanschlüsse deren Lasten übernehmen, ohne dass ihre maximale Lasttragfähigkeit überschritten wird.

Gemäß einer Ausführungsform verlaufen die Richtungen der zweiten Flügelanschlüsse schräg zueinander so, dass sich die Wirkungslinien ihrer Lasten oberhalb derselben im Bereich des Flügels schneiden, oder dass die zweiten Flügelanschlüsse schräg zueinander verlaufen und oberhalb derselben im Bereich des Flügels an einem gemeinsamen Beschlag zusammengefasst sind.

Gemäß der Erfindung umfassen die Flügelanschlüsse Pendelstützen, die jeweils durch ein rumpfseitiges Lager, ein flügelseitiges Lager und ein dazwischen angeordnetes Pendel gebildet sind.

Die ersten Flügelanschlüsse können durch Pendelstützen gebildet sein, die im Wesentlichen in der Y-Z-Ebene gelenkig sind, und die zweiten Flügelanschlüsse durch Pendelstützen, die im Wesentlichen in der X-Z-Ebene gelenkig sind.

Gemäß einer Ausführungsform der Erfindung sind die zur Aufnahme von Kräften im Wesentlichen in Flugzeug-Hochachsenrichtung Z und in Flugzeug-Längsrichtung X vorgesehenen Flügelanschlüsse an jeder Seite des Rumpfs im Wesentlichen in einer Reihe in Flugzeug-Längsrichtung X angeordnet.

Zusätzlich sind zur Aufnahme von Kräften im Wesentlichen in Spannweitenrichtung Y dienende weitere Flügelanschlüsse zwischen Rumpf und Flügel vorgesehen.

Die weiteren Flügelanschlüsse können Pendelstützen umfassen, die jeweils durch ein rumpfseitiges Lager, ein flügelseitiges Lager und ein dazwischen angeordnetes Pendel gebildet sind.

Gemäß einer Ausführungsform sind die Pendelstützen der weiteren Flügelanschlüsse im Wesentlichen in der Y-Z-Ebene gelenkig.

Gemäß einer Ausführungsform der Erfindung ist die Flügel-Rumpf-Verbindung bei einem Hochdecker-Flugzeug mit einem nach hinten gepfeilten Flügel vorgesehen.

Im Folgenden wird ein Ausführungsbeispiel der Erfindung anhand der Zeichnung erläutert. Es zeigen:
Fig. 1 eine perspektivische Ansicht einer Flügel-Rumpf-Verbindung eines Flugzeugs gemäß einem Ausführungsbeispiel der Erfindung;
Fig. 2 bis 4 Querschnittsansichten der in Fig. 1 dargestellten Flügel-Rumpf-Verbindung für verschiedene Belastungsfälle; und
Fig. 5 eine perspektivische Ansicht einer Flügel-Rumpf-Verbindung nach dem Stand der Technik, wie sie bei dem Transporttlugzeug TRANSALL Verwendung gefunden hat.

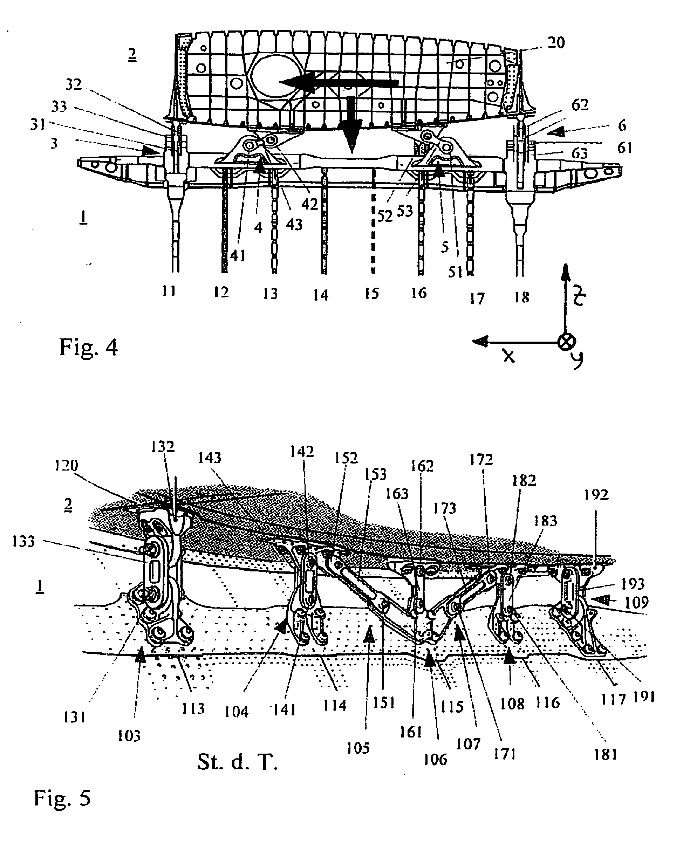

Zuerst soll anhand der Fig. 5 eine bekannte Flügel-Rumpf-Verbindung eines Flugzeugs gemäß dem Stand der Technik beschrieben werden, wie sie beim dem Transportflugzeug TRANSALL Verwendung fand. An der Oberseite eines Rumpfs 1 ist ein Flügel 2 angeschlossen mittels einer Anzahl von Flügelanschlüssen 103, 104, 105, 106, 107, 108, 109. Jeder der Flugelanschlüsse ist in Form einer Pendelstütze ausgebildet, welche ein rumpfseitiges Lager 131, 141, 151, 161, 171, 181, 191, ein flügelseiliges Lager 132, 142, 152, 162, 172, 182, 192 und ein dazwischen angeordnetes Pendel 133, 143, 153, 163, 173, 183, 193 umfasst. Nahe der Flügelvorderkante und der Flügelhinterkante sind erste Flügelanschlüsse 103, 104 und 108, 109 vorgesehen, welche zur Aufnahme von Kräften in der Flugzeug-Hochachsenrichtung Z dienen. Deren rumpfseitiges Lager 131, 141 bzw.181, 191 ist jeweils an einem Rumpfspant 113, 114 bzw. 116, 117 festgelegt. Deren flügelseitiges Lager 132, 142 bzw. 182, 192 ist an einer Flügelrippe 120 des Flügels 2 festgelegt. Weiter ist ein zur Aufnahme von Kräften in Flugzeug-Hochachsenrichtung Z vorgesehener Flügelanschluss 106 bezüglich der Flugzeug-Längsrichtung X in der Mitte zwischen den Flügelanschlüssen 104 und 108 angeordnet. Dieser ist mit einem rumpfseitigen Lager 161 an einem Rumpfspant 115 und mit einem flügelseitigen Lager 162 ebenfalls an der Flügelrippe 120 festgelegt. Zur Übertragung von Kräften in der Flugzeug-Längsrichtung X sind bei der bekannten Flügel-Rumpf-Verbindung zwei weitere Flügelanschlüsse 105, 107 vorgesehen, welche mit ihrem rumpfseitigen Lager 151 bzw. 171 zusammen mit dem rumpfseitigen Lager 161 des Z-Flügelanschlusses 106 an dem Rumpfspant 115 und mit ihrem flügelseitigen Lager 152 bzw. 172 zusammen mit den flügelseitigen Lagern 142 bzw. 182 der Z-Flügelanschlüsse 104 bzw. 108 an der Flügelrippe 120 festgelegt sind. Die zur Übertragung der Kräfte in Z-Richtung vorgesehenen Flügelanschlüsse 103 und 109 sind in der Y-Z-Ebene gelenkig, die anderen zur Übertragung von Kräften in Z-Richtung vorgesehenen Flügelanschlüsse 104, 106 und 108 sowie die zur Übertragung der Kräfte in X-Richtung vorgesehenen Flügelanschlüsse 105 und 107 sind in der X-Z-Ebene gelenkig. Die zur Übertragung der Kräfte in X-Richtung vorgesehenen Flügelanschlüsse 105 und 107 verlaufen in der X-Z-Achse schräg zur Z-Richtung und zwar so, dass sich deren Verlängerungen in einem Punkt im Rumpfspant 115 schneiden.

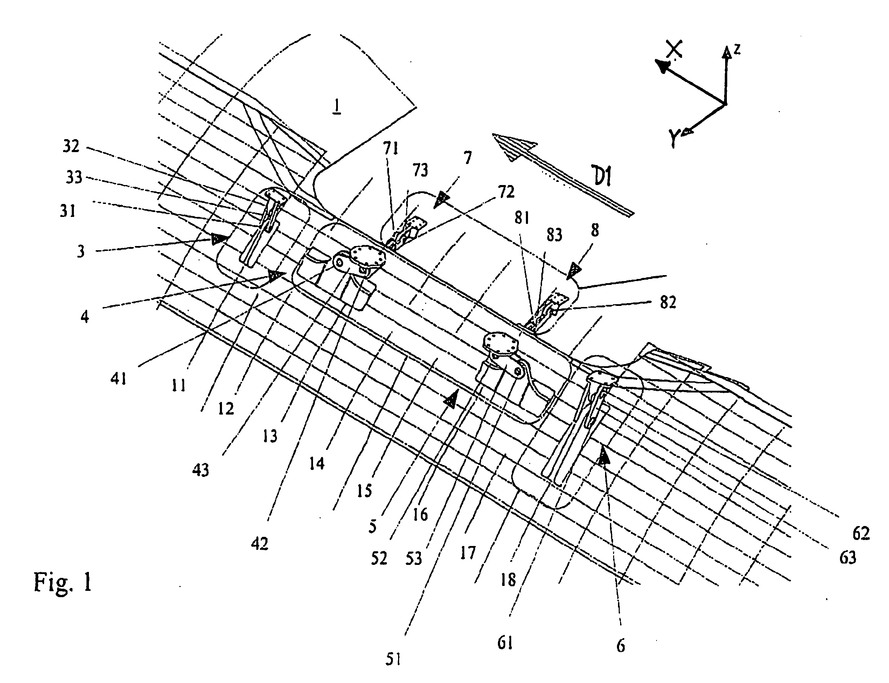

Die Figur 1 zeigt eine Flügel-Rumpf-Verbindung eines Flugzeugs gemäß einem Ausführungsbeispiel der Erfindung, bei der ein an der Oberseite eines Rumpfs 1 angeordneter Flügel 2 mittels einer Anzahl von Anschlüssen 3, 4, 5, 6 sowie mittels weiterer Anschlüsse 7, 8 mit einem Rumpf 1 verbunden ist. Es sind nur die an der Backbordseite des Flugzeugs vorgesehenen Flügelanschlüsse 3, 4, 5, 6, 7, 8 dargestellt, die Flugrichtung ist durch einen Pfeil D1 gekennzeichnet. Die Flügelanschlüsse 3, 4, 5, 6 sind zur Aufnahme von Kräften im Wesentlichen in Flugzeug-Hochachsenrichtung Z und Flugzeug-Längsrichtung X vorgesehen, die weiteren Anschlüsse 7, 8 sind zur Aufnahme von Kräften im Wesentlichen in Spannweitenrichtung Y vorgesehen..

Die Flügelanschlüsse 3, 4, 5, 6, welche im Wesentlichen in einer in gegensätzlicher Richtung zur Flugzeug-Längsrichtung X verlaufenden Reihe angeordnet sind, umfassen zwei erste Flügelanschlüsse 3, 6, die zur Aufnahme von Kräften im Wesentlichen in Flugzeug-Hochachsenrichtung Z vorgesehen sind, und zwei zweite Flügelanschlüsse 4, 5, die bei in voller Anzahl intakten Flügelanschlüssen zur Aufnahme von Kräften im Wesentlichen in Flugzeug-Längsrichtung X vorgesehen sind.

Die Flügelanschlüsse 3, 4, 5, 6 sind in Form von Pendelstützen oder Hebel-Verbindungen mit jeweils zwei Dreh-Gelenken vorgesehen, die jeweils durch ein rumpfseitiges Lager 31, 41, 51, 61, ein flügelseitiges Lager 32, 42, 52, 62 und ein dazwischen angeordnetes Pendel 33, 43, 53, 63 gebildet sind. Die rumpfseitigen Lager 31 und 61 der ersten Flügelanschlüsse 3, 6 sind jeweils an einem Rumpfspant 11 bzw. 18 festgelegt, die rumpfseitigen Lager 41, 51 der zweiten Flügelanschlüsse 4, 5 sind jeweils an zwei Rumpfspanten festgelegt, nämlich das rumpfseitige Lager 41 des Flügelanschlusses 4 an den Rumpfspanten 12 und 13 und das rumpfseitige Lager 51 des Flügelanschlusses 5 an den Rumpfspanten 16 und 17. Das "Festgelegt"-sein von Flügelanschlüssen an den jeweiligen Rumpfspanten bedeutet, dass die jeweiligen rumpfseitigen Lager über ein entsprechendes Rumpf-Anschlussteil RA entweder direkt mit dem einen bzw. den zwei Rumpfspanten 20 oder über zumindest ein weiteres Anschlussteil mit dem einen bzw. den zwei Rumpfspanten verbunden ist.

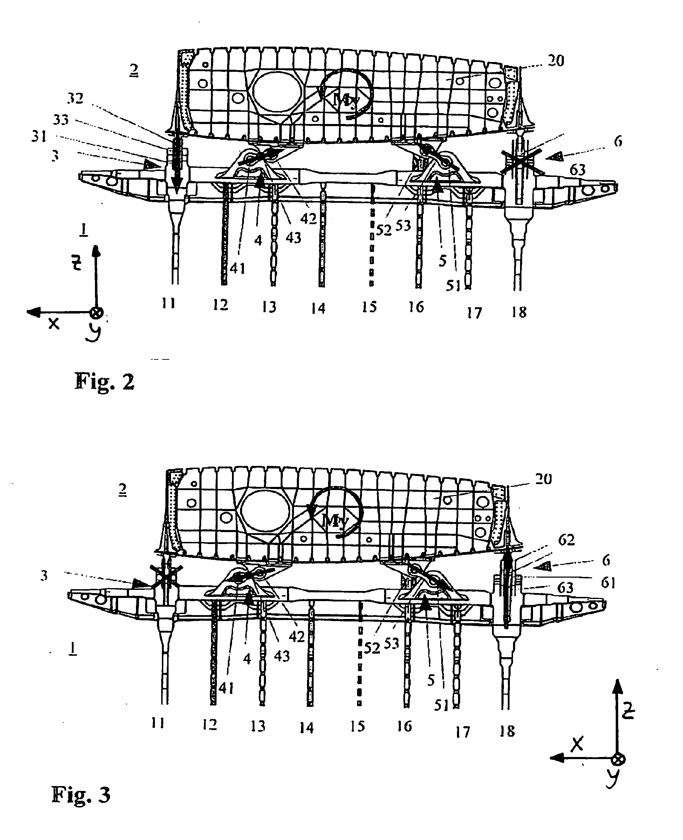

Wie die Fig. 2 bis 4 zeigen, sind die flügelseitigen Lager 32, 42, 52, 62 der Flügelanschlüsse 3, 4, 5, 6 an einer Flügelrippe 20 festgelegt, welche sich im Wesentlichen in Flugzeug-Längsrichtung X erstreckt. D.h. die beiden flügelseitigen Lager 42, 52 sind über ein entsprechendes Flügel-Anschlussteil FA entweder direkt mit ein und derselben Rippe 20 oder über zumindest ein weiteres Anschlussteil mit der Rippe 20 oder der in Y-Richtung gesehen nächstgelegenen Rippe 20 verbunden. Wie Fig. 1 zeigt, sind die die ersten Flügelanschlüsse 3, 6 bildenden Pendelstützen im Wesentlichen in der Y-Z-Ebene gelenkig, die die zweiten Flügelanschlüsse 4, 5 bildenden Pendelstützen sind im Wesentlichen in der X-Z-Ebene gelenkig.

Die Flügelanschlüsse 3, 4, 5, 6 mittels Pendelstützen sind jeweils eine Kombination aus: einem Hebel oder Hebelteil oder Pendel 33, 43, 53, 63, das an zwei in Längsrichtung voneinander beabstandeten Stellen, vorzugsweise an seinen Enden, Gelenklager aufweist, einem Flügel-Anschlussteil mit einem flügelseitigen Lager 32, 42, 53, 63 und einem Rumpf-Anschlussteil mit einem rumpfseitigen Lager 31, 41, 51, 61. Die zweiten, in Flugzeug-Längsrichtung X gesehen zwischen den ersten Flügelanschlüssen 3, 6 gelegenen zweiten Flügelanschlüsse 4, 5 sind derart ausgebildet, dass die Längserstreckung der Hebel 43, 53 der zweiten Flügelanschlüsse 4, 5 einen spitzen Winkel in Bezug auf die Flugzeug-Längsachse X oder in Bezug auf die Verbindungslinie der rumpfseitigen Lager 41, 51 der zweiten Flügelanschlüsse bilden. Die Längserstreckung der Hebel 43, 53 ist dabei so definiert, dass die Längsrichtung der Hebel durch den Mittelpunkt des flügelseitigen Lagers und den Mittelpunkt des rumpfseitigen Lagers des jeweiligen Hebels geht.

Vorzugsweise bildet dabei die Längserstreckung des Hebels des vorderen (d.h. näher zur Flugzeugspitze, also in Flugzeug-Längsrichtung gelegenen) zweiten Flügelanschlusses 4, wenn diese vom rumpfseitigen Lager 41 ausgeht, mit der negativen Flugzeug-Längsrichtung X oder der nach hinten gerichteten Verbindungslinie der Mittelpunkte der rumpfseitigen Lager 41, 51 der zweiten Flügelanschlüsse 4, 5 einen Winkel W1 zwischen 10 Grad und 30 Grad. D.h. die Richtung der Längserstreckung des Hebels des vorderen zweiten Flügelanschlusses 4 ergibt sich ausgehend von der negativen Flugzeug-Längsrichtung X oder der nach hinten gerichteten Verbindungslinie der Mittelpunkte der rumpfseitigen Lager 41, 51 der zweiten Flügelanschlüsse 4, 5 durch eine Drehung zwischen -10 Grad und -30 Grad um die positive Y-Achse.

Alternativ oder zusätzlich bildet dabei vorzugsweise die Längserstreckung des Hebels des hinteren zweiten Flügelanschlusses 5, wenn diese vom rumpfseitigen Lager 51 desselben ausgeht, mit der Flugzeug-Längsrichtung X oder der nach vorne gerichteten Verbindungslinie der Mittelpunkte der rumpfseitigen Lager 41, 51 der zweiten Flügelanschlüsse 4, 5 einen Winkel W2 zwischen 15 Grad und 40 Grad. D.h. die Richtung der Längserstreckung des Hebels des hinteren zweiten Flügelanschlusses 4 ergibt sich ausgehend von der Flugzeug-Längsrichtung X oder der nach vorne gerichteten Verbindungslinie der Mittelpunkte der rumpfseitigen Lager 41, 51 der zweiten Flügelanschlüsse 4, 5 durch eine Drehung zwischen +15 Grad und +40 Grad um die positive Y-Achse.

Diese Winkel sind für die Seitenrichtung definiert, d.h. diese gelten für die Blickrichtung in die positive Y-Richtung, entsprechend z.B. der Darstellung der Figur 4.

Vorzugsweise sind insgesamt zwei Reihen von jeweils zwei ersten Flügelanschlüssen 3, 6 und jeweils zwei zwischen diesen gelegenen zweiten Flügelanschlüssen 4, 5 vorgesehen. Diese zwei Reihen sind insbesondere zueinander symmetrisch zur Flügel-Längsachse X gelegen. Es können seitlich der Flugzeug-Längsachse X auch mehrere solcher Reihen von Flügelanschlüssen angeordnet sein. Vorzugsweise sind die Mittelpunkte der rumpfseitigen Lager 41, 51 und der flügelseitigen Lager 42, 52 innerhalb eines fiktiven, in er Flugzeug-Längsrichtung X verlaufenden Bandes mit einer Breite von 1,0 m gelegen.

In besonderen Anwendungsfällen kann es vorteilhaft sein, wenn die Mittelpunkte der flügelseitigen Lager 42, 52 der zweiten Flügelanschlüssen 4, 5 in Flugzeug-Längsachse X gesehen einen Mindestabstand von 0,2 m haben.

Wie Fig. 1 sowie die Fig. 2 bis 4 erkennen lassen, verlaufen die zweiten Flügelanschlüsse 4, 5 oder deren Hebel 43, 53, die sich im Wesentlichen in einer in der X-Z-Ebene liegenden Richtung erstrecken, schräg zur Z-Richtung zwischen dem Rumpf 1 und dem Flügel 2, wobei sie in der Weise schräg zueinander verlaufen, dass sich die Wirkungslinien der Last oder die Längsrichtungen der Hebel oberhalb derselben im Bereich des Flügels 2 und insbesondere innerhalb der Umrandung der zugehörigen Flügelrippe 20 schneiden. Die "zugehörige" Flügelrippe 20 ist diejenige Rippe, an die zumindest die Flügel-Anschlussteile FA mittelbar oder direkt angebracht oder befestigt oder mit denen die Flügel-Anschlussteile FA verbunden sind. Wie zuvor festgestellt, kann es sich bei der "zugehörigen" Flügelrippe 20 auch um die nächstliegende Rippe handeln.

Der Schrägstellungswinkel der zweiten Flügelanschlüsse 4, 5 ist so bemessen, dass die zweiten Flügelanschlüsse 4, 5 bei Defekt eines der ersten Flügelanschlüsse 3, 6 deren Lasten übernehmen, also in bedeutendem Umfang neben den Kräften in Flugzeug-Längsrichtung X auch Kräfte in Flugzeug-Hochachsenrichtung Z aufnehmen, ohne dass ihre maximale Lasttragfähigkeit überschritten wird.

Die Flügelanschlüsse 4, 5 weisen jeweils eine maximale Lasttragfähigkeit auf, die bei dem hier beschriebenen Ausführungsbeispiel auf die maximalen Flug- und Landelasten sowie auf eine nominelle Crash-Belastung ausgelegt ist, beispielsweise auf eine negative Beschleunigung von 9g in Vorwärtsrichtung.

Die Lasttragfähigkeit der einzelnen Flügelanschlüsse 3, 4, 5, 6 und deren Kraftaufnahmerichtung ist so aufeinander abgestimmt, dass bei Defekt von einem der Anschlüsse 3, 4, 5, 6 die maximale Lasttragfähigkeit der dann verbleibenden Anschlüsse für einen sicheren Normalflugbetrieb ausreicht. Das heißt, die Flügelanschlüsse sind hinsichtlich ihrer Winkellage so aufeinander abgestimmt, dass die auf die noch intakten Anschlüsse einwirkenden Lasten im "Fail-Safe"-Fall etwa so groß sind wie im "Crash"-Fall auf alle Anschlüsse. Der Ausfall eines der Anschlüsse 3, 4, 5, 6 könnte beispielsweise hervorgerufen werden durch Ermüdung, aber auch durch einen Triebwerksfehler oder, insbesondere im Fall von militärisch genutzten Flugzeugen, auch durch feindlichen Beschuss. Die Lasten, die dann in einem schadenstoleranten Fall oder "Fail-Safe"-Fall von den Flügelanschlüssen 3, 4, 5, 6 aufzunehmen sind, sind also etwa so groß wie die Lasten, die dem oben genannten nominellen Crash-Fall zugrunde gelegt sind. Es ist nicht anzunehmen, dass beide Fälle, also Ausfall einer der Flügelanschlüsse 3, 4, 5, 6 und Crash-Fall gleichzeitig auftreten.

Zusätzlich sind zur Aufnahme in Spannweitenrichtung Y weitere Flügelanschlüsse 7, 8 zwischen Rumpf 1 und Flügel 2 vorgesehen, die bei dem dargestellten Ausführungsbeispiel auch durch Pendelstützen gebildet sind, die jeweils ein rumpfseitiges Lager 71, 81, ein flügelseitiges Lager 72, 82 und ein dazwischen angeordnetes Pendel 73, 83 umfassen. Die Pendelstützen der weiteren Flügelanschlüsse 7, 8 sind im Wesentlichen in der Y-Z-Ebene gelenkig.

Nun soll anhand der Fig. 2 bis 4 die Belastung der Flügelanschlüsse 3, 4, 5, 6, welche die Z-Lasten und die X-Lasten aufnehmen, für verschiedene besondere Belastungsfälle betrachtet werden. Hierbei wird eine positive Pfeilung des Tragflügels angenommen, bei der der Schwerpunkt der am Flügel 2 wirksamen Auftriebskräfte in Flugzeug-Längsrichtung X hinter der Mitte der durch die Flügelanschlüsse 3, 4, 5, 6 gebildeten Anordnung liegt. Dadurch entsteht das gezeigte Moment My.

Fig. 2 zeigt den Fall, dass der nahe der Flügelhinterkante angeordnete Flügelanschluss 6 ausfällt. Die normalerweise von diesem getragenen Lasten verteilen sich auf die verbleibenden Flügelanschlüsse 3, 4, 5 in der gezeigten Weise, es werden nämlich die X-Flügelanschlüsse 4, 5 stärker auf Zug beansprucht, während der nahe der Flügelvorderkante befindliche Z-Flügelanschluss 3 auf Kompression beansprucht wird. Auf diese Weise wird das in Bezug auf den Flügel angedeutete Nickmoment My aufgenommen, welches aus der angenommenen positiven Pfeilung des Tragflügels resultiert. Die Zugkräfte an den X-Anschlüssen 4, 5 von 1927 kN bzw. 2088 kN und die Kompressionskraft von 936 kN am Z-Flügelanschluss 3 überschreiten die für einen nominellen Crash-Fall berücksichtigten Lasten nur unwesentlich, der später anhand der Fig. 4 erläutert wird.

Fig. 3 zeigt den Fall, dass der nahe bei der Flügelvorderkante angeordnete Z-Flügelanschluss 3 ausgefallen ist. Die auftretenden Kräfte werden von den verbleibenden Flügelanschlüssen 4, 5, 6 aufgenommen, wobei nun die beiden X-Anschlüsse 4, 5 auf Kompression belastet werden, während der nahe der Flügelhinterkante befindliche Z-Anschluss 6 auf Zug beansprucht wird. Auch in diesem Fall überschreiten die an den jeweiligen Anschlüssen auftretenden Kräfte nicht die Kräfte, auf die die Flügelanschlüsse 3, 4, 5, 6 in Hinblick auf einen nominellen Crash-Fall ausgelegt sind. An den X-Flügelanschlüssen 4, 5 wirken Kompressionskräfte von 809 kN bzw. 1085 kN, an dem Z-Flügelanschluss 6 nahe der Flügelhinterkante Zugkräfte von 1343 kN. Wieder wird das im Flügel angedeutete Nickmoment My aufgrund des gepfeilten Flügels aufgenommen.

Fig. 4 zeigt die Belastung an den Flügelanschlüssen 3, 4, 5, 6, wie sie aus einem zugrunde gelegten nominellen Crash-Fall mit einer negativen Beschleunigung von 9g in Vorwärtsrichtung bzw. 6g in der Abwärtsrichtung resultieren. An den hier als jeweils intakt angenommenen Flügelanschlüssen 3, 4, 5, 6 wirken Kompressionskräfte von 1.115 kN bzw. 1.118 kN an den Z-Flügelanschlüssen 3 und 6 nahe der Flügelvorderkante bzw. der Flügelhinterkante und Zugkräfte von 1.750 kN bzw. 1.995 kN an den X-Anschlüssen 4, 5.

Wie bereits vorher erläutert, ist nicht anzunehmen, dass der Ausfall eines der Flügelanschlüsse 3, 4, 5, 6 und ein Crash-Fall gleichzeitig auftreten. Die an den zusätzlichen Flügelanschlüssen 7, 8, welche im Wesentlichen in Spannweitenrichtung Y wirksam sind, auftretenden Kräfte sind hier im Wesentlichen unberücksichtigt geblieben.

Die an den beiden Seiten des Rumpfs 1 vorgesehenen Anordnungen der in V-Richtung und X-Richtung wirkenden Flügelanschlüsse 3, 4, 5, 6, von denen in Fig. 1 nur die backbordseitigen dargestellt sind, wirken zusammen, da sie über den Flügel 2 gekoppelt sind, so dass insbesondere um die Flugzeug-Hochachse Z am Flügel 2 auftretende Kräfte von der Gesamtheit aller Flügelanschlüsse an beiden Rumpfseiten aufgenommen werden.

### Bezugszeichenliste

- 1: Rumpf
- 2: Flügel
- 3, 4, 5, 6: Flügelanschluss
- 31, 41, 51, 61: rumpfseitiges Lager
- 32, 42, 52, 62: flügelseitiges Lager
- 33, 43, 53, 63: Pendel
- 7, 8: Flügelanschluss
- 11, 12, 13, 14, 15, 16, 17, 18: Rumpfspant
- 20: Flügelrippe
- 71, 81: rumpfseitiges Lager
- 73, 83: flügelseitiges Lager
- 103, 104, 105, 106, 107, 108, 109: Flügelanschluss
- 131, 141, 151, 161, 171, 181, 191: rumpfseitiges Lager
- 132, 142, 152, 162, 172, 182, 192: flügelseitiges Lager
- 133, 143, 153, 163, 173, 183, 193: Pendel
- 113, 114, 115, 116, 117: Rumpfspant
- 120: Flügelrippe

## Patentansprüche

1. Flügel-Rumpf-Verbindung eines Flugzeugs, bei der ein im oberen Bereich des Rumpfs (1) angeordneter Flügel (2) mittels einer Anzahl von Anschlüssen (3, 4, 5, 6) mit dem Rumpf (1) verbunden ist,
**dadurch gekennzeichnet,**
**dass** die Anzahl von Anschlüssen (3, 4, 5, 6) zumindest eine Reihe von Flügelanschlüssen (3, 4, 5, 6) aufweist, die jeweils zumindest zwei erste Flügelanschlüsse (3, 6) und zumindest zwei zweite Flügelanschlüsse (4, 5) aufweist, wobei die Anschlüsse (3, 4, 5, 6) in der Flugzeug-Längsachse (X) gesehen hintereinander angeordnet und die jeweils ersten Flügelanschlüsse (3, 6) und jeweils zweiten Flügelanschlüsse (4, 5) zur Aufnahme von Kräften in unterschiedlichen Richtungen vorgesehen sind,
**dass** die Lasttragfähigkeit der einzelnen Flügelanschlüsse (3, 4, 5, 6) und deren Kraftaufnahmerichtung so aufeinander abgestimmt sind, dass bei Defekt von einem der Anschlüsse (3, 4, 5, 6) die maximale Lasttragfähigkeit der verbleibenden Anschlüsse (3, 4, 5, 6) für einen sicheren Normalflugbetrieb ausreicht, und
**dass** die zweiten Flügelanschlüsse (4, 5) jeweils ein rumpfseitiges Lager (41, 51), ein flügelseitiges Lager (42, 52) und eine an diesen gelenkig gelagerte Pendelstütze (43, 53) derart aufweisen,
• **dass** die Wirkungslinien der durch die Pendelstützen (43, 53) übertragenen Lasten sich im Bereich des Flügels (2) schneiden,
oder
• **dass** die sich zum Flügel (2) hin erstreckenden Abschnitte der Wirkungslinien der durch die Pendelstützen (43, 53) übertragenen Lasten einen spitzen Winkel bilden mit dem zwischen den Pendelstützen (43, 53) gelegenen Abschnitt der Flugzeug-Längsachse (D1) oder mit dem zwischen den Pendelstützen (43, 53) gelegenen Abschnitt der Verbindungslinie der rumpfseitigen Lager (41, 51) der zweiten Flügelanschlüsse (4, 5).

2. Flügel-Rumpf-Verbindung nach Anspruch 1, **dadurch gekennzeichnet, dass** der sich zum Flügel (2) hin erstreckende Abschnitt der Wirkungslinie des in der Flugzeug-Längsachse (X) gesehen vorne gelegenen Flügelanschlusses (4) der zweiten Flügelanschlüsse (4, 5) mit dem zwischen den Pendelstützen (43, 53) gelegenen Abschnitt der Flugzeug-Längsachse (X) oder mit dem zwischen den Pendelstützen (43, 53) gelegenen Abschnitt der Verbindungslinie der rumpfseitigen Lager (41, 51) der zweiten Flügelanschlüsse (4, 5) einen Winkel (W1) zwischen 10 Grad und 30 Grad bilden.

3. Flügel-Rumpf-Verbindung nach einem der voranstehenden Ansprüche, **dadurch gekennzeichnet, dass** die Anzahl von Anschlüssen (3, 4, 5, 6) zumindest eine Reihe von Flügelanschlüssen (3, 4, 5, 6) aufweist, die jeweils zwei erste Flügelanschlüsse (3, 6) und zwei zwischen diesen gelegene zweite Flügelanschlüsse (4, 5) aufweist,

4. Flügel-Rumpf-Verbindung nach einem der voranstehenden Ansprüche, **dadurch gekennzeichnet, dass** zwei Reihen von Flügelanschlüssen (3, 4, 5, 6) vorgesehen sind, die zueinander symmetrisch zur Flugzeug-Längsachse (X) angeordnet sind.

5. Flügel-Rumpf-Verbindung nach einem der voranstehenden Ansprüche, **dadurch gekennzeichnet, dass** mehr als zwei Reihen von Flügelanschlüssen (3, 4, 5, 6) vorgesehen sind.

6. Flügel-Rumpf-Verbindung nach einem der voranstehenden Ansprüche, **dadurch gekennzeichnet, dass** die ersten Flügelanschlüsse (3, 6) zur Aufnahme von Kräften im Wesentlichen in Flugzeug-Hochachsenrichtung (Z) vorgesehen sind und die zweiten Flügelanschlüsse (4, 5) bei in vollständiger Anzahl intakten Flügelanschlüssen (3, 4, 5, 6) zur Aufnahme von Kräften im Wesentlichen in Flugzeug-Längsrichtung (X) vorgesehen sind.

7. Flügel-Rumpf-Verbindung nach Anspruch 6, **dadurch gekennzeichnet, dass** die Lasttragfähigkeit der ersten Flügelanschlüsse (3. 6) und deren Kraftaufnahmerichtung so vorgesehen sind, dass diese bei Ausfall eines der zweiten Flugelanschlüsse (4, 5) zusammen mit den intakt verbleibenden zweiten Flügelanschlüssen (5, 4), die in der Flügel-Rumpf-Verbindung auftretenden Lasten aufnehmen, ohne dass deren maximale Lasttragfähigkeit bei Normalflugbetrieb überschritten wird.

8. Flügel-Rumpf-Verbindung nach einem der Ansprüche 6 bis 7, **dadurch gekennzeichnet, dass** die ersten Flügelanschlüsse (3, 6) nahe dem in der FlugzeugLängsachse (X) gesehen vorderen Flügelholm bzw. dem hinteren Flügelholm angeordnet sind, und die zweiten Flügelanschlüsse (4, 5) dazwischen vorgesehen sind.

9. Flügel-Rumpf-Verbindung nach einem der Ansprüche 6 bis 8, **dadurch gekennzeichnet, dass** sich die ersten Flügelanschlüsse (3, 6) im Wesentlichen parallel zur Z-Richtung zwischen dem Rumpf (1) und dem Flügel (2) erstrecken, und dass sich die zweiten Flügelanschlüsse (4, 5) im Wesentlichen in einer in der X-Z-Ebene liegenden Richtung schräg zur Z-Richtung zwischen dem Rumpf (1) und dem Flügel (2) erstrecken, wobei der Schrägstellungswinkel der zweiten Flügelanschlüsse (4, 5) so bemessen und aufeinander abgestimmt sind, dass die zweiten Flügelanschlüsse (4, 5) bei Defekt eines der ersten Flügelanschlüsse (3, 6) deren Lasten übernehmen, ohne dass ihre maximale Lasttragfähigkeit überschritten wird.

10. Flügel-Rumpf-Verbindung nach einem der voranstehenden Ansprüche, **dadurch gekennzeichnet, dass** die zweiten Flügelanschlüsse (4, 5) schräg zueinander verlaufen und oberhalb derselben im Bereich des Flügels (2) an einem gemeinsamen Beschlag zusammengefasst sind.

11. Flügel-Rumpf-Verbindung nach einem der voranstehenden Ansprüche, **dadurch gekennzeichnet, dass** die ersten Flügelanschlüsse (3, 6) durch Pendelstützen gebildet sind, die im Wesentlichen in der Y-Z-Ebene gelenkig sind, und die zweiten Flügelanschlüsse (4, 5) durch Pendelstützen gebildet sind die im Wesentlichen in der X-Z-Ebene gelenkig sind.

12. Flügel-Rumpf-Verbindung nach einem der voranstehenden Ansprüche, **dadurch gekennzeichnet, dass** die zur Aufnahme von Kräften im Wesentlichen in Flugzeug-Hochachsenrichtung (Z) und in Flugzeug-Längsrichtung (X) vorgesehenen Flugelanschlüsse (3, 4, 5, 6) an jeder Seite des Rumpfs (1) im Wesentlichen in einer Reihe in Längsrichtung (X) des Flugzeugs angeordnet sind.

13. Flügel-Rumpf-Verbindung nach einem der voranstehenden Ansprüche, **dadurch gekennzeichnet, dass** zusätzlich zur Aufnahme von Kräften im Wesentlichen in Spannweitenrichtung (Y) dienende weitere Flügelanschlüsse (7, 8) zwischen Rumpf (1) und Flügel (2) vorgesehen sind.

14. Flügel-Rumpf-Verbindung nach Anspruch 13, **dadurch gekennzeichnet, dass** die weiteren Flügelanschlüsse (7, 8) Pendelstützen aufweisen, die jeweils durch ein rumpfseitiges Lager (71, 81), ein flügelseitiges Lager (72, 82) und ein dazwischen angeordnetes Pendel (73, 83) gebildet sind.

15. Flügel-Rumpf-Verbindung nach Anspruch 14, **dadurch gekennzeichnet, dass** die Pendelstützen der weiteren Flügelanschlüsse (7, 8) im Wesentlichen in der Y-Z-Ebene gelenkig sind.

16. Flügel-Rumpf-Verbindung nach einem der voranstehenden Ansprüche, **dadurch gekennzeichnet, dass** die Flügel-Rumpf-Verbindung bei einem Hochdecker-Flugzeug mit einem nach hinten gepfeilten Flügel (2) vorgesehen ist.

## Claims

1. A wing-fuselage joint of an aircraft, in which a wing (2) arranged in the upper region of the fuselage (1) is connected to the fuselage (1) by means of a plurality of connections (3, 4, 5, 6),
**characterized in**
**that** the plurality of connections (3, 4, 5, 6) features at least one row of wing connections (3, 4, 5, 6) that respectively features at least two first wing connections (3, 6) and at least two second wing connections (4, 5), wherein the connections (3, 4, 5, 6) are arranged in succession referred to the longitudinal axis (X) of the aircraft and the respective first wing connections (3, 6) and the respective second wing connections (4, 5) are provided for taking up forces in different directions, in
**that** the load bearing capacity of the individual wing connections (3, 4, 5, 6) and their force take-up direction are adapted to one another in such a way that, in case one of the connections (3, 4, 5, 6) becomes defective, the maximum load bearing capacity of the remaining connections (3, 4, 5, 6) suffices for normal flight operations, and in
**that** the second wing connections (4, 5) respectively feature a bearing (41, 51) on the fuselage side, a bearing (42, 52) on the wing side and a rocker pendulum (43, 53) that is supported thereon in an articulated fashion, namely such
• **that** the lines of application of the loads transmitted by the rocker pendulums (43, 52) intersect in the region of the wing (2)
or
• **that** the sections of the lines of application of the loads transmitted by the rocker pendulums (43, 52) which extend toward the wing (2) form an acute angle with the section of the longitudinal axis of the aircraft which lies between the rocker pendulums (43, 52) or with the section of the connecting line of the bearings (41, 51) of the second wing connections (4, 5) on the fuselage side which lies between the rocker pendulums (43, 53).

2. The wing-fuselage joint according to Claim 1, **characterized in that** the section of the line of application of, referred to the longitudinal axis of the aircraft, the front wing connection (4) of the second wing connections (4, 5) which extends toward the wing (2) and the section of the longitudinal axis of the aircraft which lies between the rocker pendulums (43, 53) or the section of the connecting line of the bearings (41, 51) of the second wing connections (4, 5) on the fuselage side which lies between the rocker pendulums (43, 53) form an angle (W1) between 10 degrees and 30 degrees.

3. The wing-fuselage joint according to one of the preceding claims, **characterized in that** the plurality of connections (3, 4, 5, 6) features at least one row of wing connections (3, 4, 5, 6) that respectively features two first wing connections (3, 6) and two second wing connections (4, 5) that lie between the first wing connections.

4. The wing-fuselage joint according to one of the preceding claims, **characterized in that** two rows of wing connections (3, 4, 5, 6) are provided and arranged symmetric to one another referred to the longitudinal axis of the aircraft.

5. The wing-fuselage joint according to one of the preceding claims, **characterized in that** more than two rows of wing connections (3, 4, 5, 6) are provided.

6. The wing-fuselage joint according to one of the preceding claims, **characterized in that** the first wing connections (3, 6) are provided for taking up forces in essentially the direction of the vertical axis (Z) of the aircraft and the second wing connections (4, 5) are provided, if all wing connections (3, 4, 5, 6) are intact, for taking up forces in essentially the longitudinal direction of the aircraft.

7. The wing-fuselage joint according to Claim 6, **characterized in that** the load bearing capacity of the first wing connections (3, 6) and their force take-up direction are realized such that, if one of the second wing connections (4, 5) fails, the first wing connections take up the loads occurring in the wing-fuselage joint together with the remaining intact second wing connections (5, 4) without their maximum load bearing capacity being exceeded during normal flight operations.

8. The wing-fuselage joint according to one of Claims 6 to 7, **characterized in that** the first wing connections (3, 6) are arranged near the front wing spar or the rear wing spar referred to the longitudinal axis of the aircraft and the second wing connections (4, 5) are provided in between.

9. The wing-fuselage joint according to one of Claims 6 to 8, **characterized in that** the first wing connections (3, 6) extend essentially parallel to the Z-direction between the fuselage (1) and the wing (2), and **in that** the second wing connections (4, 5) essentially extend at an incline to the Z-direction between the fuselage (1) and the wing (2) in a direction that lies in the X-Z-plane, wherein the angles of inclination of the second wing connections (4, 5) are dimensioned and adapted to one another in such a way that, if one of the first wing connections (3, 6) becomes defective, the second wing connections (4, 5) take over the load of the defective first wing connection without their maximum load carrying capacity being exceeded.

10. The wing-fuselage joint according to one of the preceding claims, **characterized in that** the second wing connections (4, 5) extend at an incline to one another and are combined above said second wing connections on a common bracket in the region of the wing (2).

11. The wing-fuselage joint according to one of the preceding claims, **characterized in that** the first wing connections (3, 6) are formed by rocker pendulums that are articulated essentially in the Y-Z-plane, and **in that** the second wing connections (4, 5) are formed by rocker pendulums that are articulated essentially in the X-Z-plane.

12. The wing-fuselage joint according to one of the preceding claims, **characterized in that** the wing connections (3, 4, 5, 6) provided for taking up forces in essentially the direction of the vertical axis (Z) of the aircraft and in the longitudinal direction (X) of the aircraft are arranged in essentially a row in the longitudinal direction (X) of the aircraft on each side of the fuselage (1).

13. The wing-fuselage joint according to one of the preceding claims, **characterized in that** other wing connections (7, 8) for taking up forces in essentially the wingspan direction (Y) are provided between the fuselage (1) and the wing (2).

14. The wing-fuselage joint according to Claim 13, **characterized in that** the other wing connections (7, 8) feature rocker pendulums that are respectively formed by a bearing (71, 81) on the fuselage side, a bearing (72, 82) on the wing side and a pendulum (73, 83) arranged in between.

15. The wing-fuselage joint according to Claim 14, **characterized in that** the rocker pendulums of the other wing connections (7, 8) are articulated in essentially the Y-Z-plane.

16. The wing-fuselage joint according to one of the preceding claims, **characterized in that** the wing-fuselage joint is provided on a high-wing monoplane with a backswept wing (2).

## Revendications

1. Jonction aile-fuselage d'un aéronef, dans laquelle une aile (2) disposée dans la région supérieure du fuselage (1) est reliée au fuselage (1) au moyen de raccordements (3, 4, 5, 6),
**caractérisée en ce que**,
le nombre de raccordements (3, 4, 5, 6) présente au moins une rangée de raccordements d'aile (3, 4, 5, 6) qui présente respectivement au moins deux premiers raccordements d'aile (3, 6) et au moins deux deuxièmes raccordements d'aile (4, 5), sachant que les raccordements (3, 4, 5, 6), vus dans l'axe longitudinal de l'aéronef (X), sont disposés l'un derrière l'autre et les respectivement premiers raccordements d'aile (3, 6) et respectivement deuxièmes raccordements d'aile (4, 5) sont prévus pour absorber les forces dans différentes directions,
que la capacité portante des différents raccordements d'aile (3, 4, 5, 6) et leur sens d'absorption des forces sont ainsi déterminés l'un à l'autre qu'en cas de défaillance de l'un des raccordements (3, 4, 5, 6), la capacité portante maximale des raccordements restants (3, 4, 5, 6) soit atteinte pour un fonctionnement de vol normal sûr, et
que les deuxièmes raccordements d'aile (4, 5) présentent chacun un palier côté fuselage (41, 51), un palier côté aile (42, 52) et un appui pendulaire (43, 53) placé de manière articulée sur ceux-ci de sorte que,
• les lignes d'action des charges transmises par les appuis pendulaires (43, 53) se coupent au niveau de l'aile (2),
ou
• que les segments s'étendant en direction de l'aile (2) des lignes d'action des charges transmises par les appuis pendulaires (43, 53), forment un angle aigu avec le segment de l'axe longitudinal de l'aéronef placé entre les appuis pendulaires (43, 53) ou avec le segment de la ligne de jonction du palier côté fuselage (41, 51) des deuxièmes raccordements d'aile (4, 5) placé entre les appuis pendulaires (43, 53).

2. Jonction aile-fuselage selon la revendication 1, **caractérisée en ce que** le segment s'étendant en direction de l'aile (2) de la ligne d'action du raccordement d'aile (4) des deuxièmes raccordements d'aile (4, 5) placé à l'avant, vu dans l'axe longitudinal de l'aéronef, forme, avec le segment de l'axe longitudinal de l'aéronef placé entre les appuis pendulaires (43, 53) ou avec le segment de la ligne de jonction du palier côté fuselage (41, 51) des deuxièmes raccordements d'aile (4, 5) placé entre les appuis pendulaires (43, 53), un angle (W1) entre 10 degrés et 30 degrés.

3. Jonction aile-fuselage selon l'une des revendications précédentes, **caractérisée en ce que** le nombre de raccordements (3, 4, 5, 6) présente au moins une rangée de raccordements d'aile (3, 4, 5, 6) qui présente respectivement deux premiers raccordements d'aile (3, 6) et deux deuxièmes raccordements d'aile (4, 5) placés entre ceux-ci.

4. Jonction aile-fuselage selon l'une des revendications précédentes, **caractérisée en ce que** deux rangées de raccordements d'aile (3, 4, 5, 6) sont prévues, lesquelles sont disposées symétriquement l'une à l'autre par rapport à l'axe longitudinale de l'aéronef.

5. Jonction aile-fuselage selon l'une des revendications précédentes, **caractérisée en ce que** plus de deux rangées de raccordements d'aile (3, 4, 5, 6) sont prévues.

6. Jonction aile-fuselage selon l'une des revendications précédentes, **caractérisée en ce que** les premiers raccordements d'aile (3, 6) sont prévus pour absorber les forces dans essentiellement la direction de l'axe vertical de l'aéronef (Z) et les deuxièmes raccordements d'aile (4, 5), lorsque les raccordements d'aile intacts (3, 4, 5, 6) sont au complet, sont prévus pour absorber les forces dans essentiellement la direction longitudinale de l'aéronef.

7. Jonction aile-fuselage selon la revendication 6, **caractérisée en ce que** la capacité portante des premiers raccordements d'aile (3, 6) et leur sens d'absorption des forces sont ainsi prévus que ceux-ci, en cas de défaillance de l'un des deuxièmes raccordements d'aile (4, 5), absorbent conjointement avec les deuxièmes raccordements d'aile (5, 4) intacts restants, les charges apparaissant dans la jonction aile-fuselage, sans que leur capacité portante maximale en fonctionnement de vol normal ne soit dépassée.

8. Jonction aile-fuselage selon l'une des revendications 6 à 7, **caractérisée en ce que** les premiers raccordements d'aile (3, 6) sont placés à proximité du chapeau avant d'aile respectivement du chapeau arrière d'aile, vus dans l'axe longitudinal de l'aéronef, et les deuxièmes raccordements d'aile (4, 5) sont prévus entre ceux-ci.

9. Jonction aile-fuselage selon l'une des revendications 6 à 8, **caractérisée en ce que** les premiers raccordements d'aile (3, 6) s'étendent de manière essentiellement parallèle à la direction Z entre le fuselage (1) et l'aile (2) et que les deuxièmes raccordements d'aile (4, 5) s'étendent essentiellement dans une direction se situant dans le plan X-Z obliquement par rapport au plan Z entre le fuselage (1) et l'aile (2), sachant que l'angle de position oblique des deuxièmes raccordements d'aile (4, 5) est ainsi mesuré et déterminé l'un par rapport à l'autre que les deuxièmes raccordements d'aile (4, 5), en cas de défaillance de l'un des premiers raccordements d'aile (3, 6) absorbent leurs charges, sans que leur capacité portante maximale ne soit dépassée.

10. Jonction aile-fuselage selon l'une des revendications précédentes, **caractérisée en ce que** les deuxièmes raccordements (4, 5) ont un tracé oblique l'un par rapport à l'autre et sont réunis par le haut, au niveau de l'aile (2), sur une ferrure commune.

11. Jonction aile-fuselage selon l'une des revendications précédentes, **caractérisée en ce que** les premiers raccordements d'aile (3, 6) sont formés par des appuis pendulaires qui sont articulés essentiellement dans le plan Y-Z, et les deuxièmes raccordements d'aile (4, 5) sont formés par des appuis pendulaires qui sont articulés essentiellement dans le plan X-Z.

12. Jonction aile-fuselage selon l'une des revendications précédentes, **caractérisée en ce que** les raccordements d'aile (3, 4, 5, 6) prévus pour absorber les forces essentiellement dans la direction de l'axe vertical de l'aéronef (Z) et dans la direction longitudinale de l'aéronef (X), sont disposés de chaque côté du fuselage (1) essentiellement en une rangée dans la direction longitudinale de l'aéronef (X).

13. Jonction aile-fuselage selon l'une des revendications précédentes, **caractérisée en ce que** des raccordements d'aile supplémentaires (7, 8) servant essentiellement dans la direction de l'envergure (Y) sont prévus entre le fuselage (1) et l'aile (2), pour absorber les forces de manière supplémentaire.

14. Jonction aile-fuselage selon la revendication 13, **caractérisée en ce que** les raccordements d'aile supplémentaires (7, 8) présentent des appuis pendulaires formés respectivement par un palier côté fuselage (71, 81), un palier côté aile (72, 82) et un pendule placé entre eux (73, 83).

15. Jonction aile-fuselage selon la revendication 14, **caractérisée en ce que** les appuis pendulaires des raccordements d'aile supplémentaires (7, 8) sont essentiellement articulés dans le plan Y-Z.

16. Jonction aile-fuselage selon l'une des revendications précédentes , **caractérisée en ce que** la jonction aile-fuselage est prévue dans un avion à aile haute avec une aile qui est en flèche vers l'arrière (2).
